(19) **Europäisches Patentamt**
**European Patent Office**
**Office européen des brevets**

(11) Veröffentlichungsnummer: **0 206 429 B1**

# EUROPÄISCHE PATENTSCHRIFT

(45) Veröffentlichungstag der Patentschrift: **23.10.91**

(51) Int. Cl.⁵: **A23G 9/12**, F25D 3/08

(21) Anmeldenummer: **86201091.5**

(22) Anmeldetag: **23.06.86**

(54) **Scheibenförmige, in eine Speiseeismaschine einlegbare Kältepatrone.**

(30) Priorität: **26.06.85 AT 1904/85**

(43) Veröffentlichungstag der Anmeldung:
**30.12.86 Patentblatt 86/52**

(45) Bekanntmachung des Hinweises auf die
Patenterteilung:
**23.10.91 Patentblatt 91/43**

(84) Benannte Vertragsstaaten:
**DE FR GB IT NL SE**

(56) Entgegenhaltungen:
**DE-C- 521 464      FR-A- 2 403 747**
**GB-A- 1 032 859    GB-A- 2 144 208**
**US-A- 3 065 606    US-A- 3 780 536**
**US-A- 3 914 956    US-A- 4 326 389**

(73) Patentinhaber: **N.V. Philips' Gloeilampenfabrieken**
**Groenewoudseweg 1**
**NL-5621 BA Eindhoven(NL)**

(72) Erfinder: **Bukoschek, Romuald Leander**
**INT. OCTROOIBUREAU B.V. Prof. Holstlaan 6**
**NL-5656 AA Eindhoven(NL)**
Erfinder: **Eckel, Merowech**
**INT. OCTROOIBUREAU B.V. Prof. Holstlaan 6**
**NL-5656 AA Eindhoven(NL)**
Erfinder: **Schröder, Johann**
**INT. OCTROOIBUREAU B.V. Prof. Holstlaan 6**
**NL-5656 AA Eindhoven(NL)**

(74) Vertreter: **Bos, Kornelis Sjoerd et al**
**INTERNATIONAAL OCTROOIBUREAU B.V.**
**Prof. Holstlaan 6**
**NL-5656 AA Eindhoven(NL)**

## Beschreibung

Die Erfindung betrifft eine scheibenförmige, in eine Speiseeismaschine einlegbare Kältepatrone, die mit einem Latentwärmespeichermittel gefüllt ist und deren eine Scheibenhauptwand zum Zusammenwirken mit einem Schab- und Rührwerkzeug der Speiseeismaschine dient. Aus der DE-A-28 31 592 ist eine als Haushaltgerät dienende Speiseeismaschine bekannt, bei der eine derartige Kältepatrone, die vorzugsweise in einer Meridianebene geteilt sein kann, Verwendung findet, über deren Aufbau aber keine näheren Angaben gemacht sind.

Die Erfindung hat es sich zum Ziel gesetzt, eine Kältepatrone der eingangs angeführten Gattung so auszugestalten, dass sie einfach aufgebaut ist und eine einwandfreie Funktionsweise der Speiseeismaschine gewährleistet, so dass Speiseeis einwandfrei und mit guter Qualität hergestellt werden kann. Hierzu ist erfindungsgemäss bei einer derartigen Kältepatrone vorgesehen, dass sie durch mindestens zwei miteinander verbundene Teile gebildet ist, von welchen ein Teil aus der dem Schab- und Rührwerkzeug zugewandten Scheibenhauptwand und der andere Teil aus einem wannenförmigen Bodenteil besteht, dass die zum Zusammenwirken mit dem Schab- und Rührwerkzeug dienende Scheibenhauptwand formstabil und gewölbt ausgebildet ist und dass mindestens eine Wandung des Bodenteiles sich selbst der Volumenänderung des Latentwärmespeichermittels beim Phasenübergang reversibel anpassbar ausgebildet ist, und dass im Zentrum der zum Zusammenwirken mit dem Schab- und Rührwerkzeug dienenden Scheibenhauptwand ein Gegenlager für das Schab- und Rührwerkzeug der Speiseeismaschine vorgesehen ist und dieses Gegenlager durch einen gegenüber der Scheibenhauptwand erhabenen, als Handgriff verwendbaren Teil gebildet ist. Dadurch, dass die Scheibenhauptwand, mit der das Schab- und Rührwerkzeug der Speiseeismaschine zusammenwirkt, eine stabile, sich nicht ändernde Form hat, kann das Schab- und Rührwerkzeug das sich an dieser Scheibenhauptwand bildende Speiseeis stets einwandfrei und gleichmässig abschaben und zusammen mit der noch nicht gefroreren Speiseeismischung vermischen und umwälzen, was für eine qualitativ gute Herstellung des Speiseeises sehr wichtig ist. Hingegen gestattet der Bodenteil eine Volumenänderung des Latentwärmespeichermittels, wie sie bei dessen Phasenübergang zwischen flüssig und fest beziehungsweise umgekehrt auftritt, dadurch, dass sich mindestens eine Wandung des Bodenteils durch ihre Flexibilität einer solchen Volumenänderung anpassen kann, was durch eine geeignet Wahl von Formgebung, Material und Wandstärke erreichbar ist. Somit behält die mit dem Schab- und Rührwerkzeug zusammenwirkende Scheibenhauptwand stets ihre Form, wogegen Volumenänderungen des Latentwärmespeichermittels vom Bodenteil aufgefangen werden.

Aus der GB-A-2 144 208 ist eine Speiseeismaschine bekannt mit einem topfartigen Behälter. Das Problem der Volumenänderung beim Phasenübergang ist hierbei gelöst durch Freilassen eines leeren oder mit Luft gefüllten Raumes oberhalb des Kältespeichermittels. Solch eine Lösung wäre bei der Kältepatrone nach der Erfindung nicht möglich, da die Wärmeübertragung durch die obere Scheibenwand stattfindet.

Es ist an dieser Stelle zu erwähnen, dass es an sich bekannt ist, bei Kältespeicheren allgemeiner Art deren Wandung flexibel auszubilden, damit Volumenänderungen des Latentwärmespeichermittels beim Phasenübergang zu keiner Zerstörung des Kältespeichers führen, wie dies in der DE-A-28 46 988 angegeben ist, wobei sich aber bei dem dort gezeigten Kältespeicher Formänderungen nicht störend bemerkbar machen, da mit keiner Wandung ein Werkzeug oder dergleichen zusammenwirkt. Um solche Volumenänderungen eines Latentwärmespeichermittels aufnehmen zu können, ist bei einer im DE-U-84 38 146 gezeigten Speiseeismachine auch schon vorgeschlagen worden, den an sich formstabilen Boden eines doppelwandigen, das Latentwärmespeichermittel enthaltenden Topfes über einen flexiblen Ring mit dem Gehäuse des Topfes zu verbinden, so dass die in sich steife Bodenwand als Ganzes den Volumenänderungen des Latentwärmespeichermittels nachgeben kann. Eine solche Konstruktion ist jedoch sehr aufwendig und kostspielig. Demgegenüber wird bei einer scheibenförmigen Kältepatrone durch die erfindungsgemässen Massnahmen auf sehr einfache Weise erreicht, dass die mit dem Schab- und Rührwerkzeug zusammenwirkende Scheibenhauptwand ihre Form nicht ändert und die Volumenänderung des Latentwärmespeichermittels beim Phasenübergang von mindestens einer in sich flexiblen Wand des Bodenteiles aufgenommen wird.

Durch die Scheibenhauptwand mit einem Gegenlager für das Schab- und Rührwerkzeug zu versehen, wird ein sicheres Zusammenwirken desselben mit der Kältepatrone gewährleistet. Da dieses Gegenlager durch einen gegenüber der Scheibenhauptwand erhabenen Teil gebildet ist, wird noch der Vorteil erhalten, dass dieser Teil als Handgriff verwendet werden kann, so dass sich das Hantieren der Kältepatrone besonders einfach gestaltet, dies insbesondere beim Einlegen der Kältepatrone in die Speiseeismaschine und bei ihrem Herausnehmen aus derselben.

Für die Stabilität der Form der mit dem Schab- und Rührwerkzeug zusammenwirkenden Scheibenhauptwand, ist ihre Wandstärke und ihre Wölbung, massgebend. Beispielsweise kann die Wölbung kegelig geformt sein. Als besonders vorteilhaft hat sich erwiesen, wenn die Wölbung der zum Zusammenwirken mit dem Schab- und Rührwerkzeug dienenden Scheibenhauptwand kalottenförmig ausgebildet ist. Hierdurch wird eine besonders hohe Formstabilität erhalten.

Durch die Wölbung der mit dem Schab- und Rührwerkzeug zusammenwirkenden Scheibenhauptwand wird aber noch ein weiterer Vorteil erhalten. Wesentlich ist nämlich, dass die Kältepatrone möglichst vollständig mit dem Latentwärmespeichermittel gefüllt ist, damit sie keine Luftblasen enthält, die sich in der Betriebslage der Kältepatrone in der Speiseeismaschine an der mit dem Schab- und Rührwerkzeug zusammenwirkenden Scheibenhauptwand ansammeln würden, was den Wärmeübergang zwischen dem Latentwärmespeichermittel und dieser Scheibenhauptwand stark beeinträchtigen würde, wodurch im Bereich der Luftblasen die Speiseeisbildung behindert wäre, was keine gleichmässige Speiseeisbildung zur Folge hätte. Durch die Wölbung der Scheibenhauptwand wird nun erreicht, dass sich allenfalls doch in der Kältepatrone enthaltene Luftblasen sich stets an der höchsten Stelle der Kältepatrone ansammeln. Ist die Kältepatrone beispielsweise nach innen gewölbt, so bilden sich allfällige Luftblasen im Bereich der Umrandung der Kältepatrone, wo sie aber weniger störend sind, da der andere überwiegende Bereich der Scheibenhauptwand im guten Wärmekontakt mit dem Latentwärmespeichermittel steht und somit die Speiseeisbildung nicht entscheidend behindert ist. In diesem Zusammenhang hat sich als besonders vorteilhaft erwiesen, wenn die zum Zusammenwirken mit dem Schab- und Rührwerkzeug dienende Scheibenhauptwand nach aussen gewölbt ist. Auf diese Weise sammeln sich allfällige Luftblasen im Zentrum der Kältepatrone, wo das Schab- und Rührwerkzeug seine geringste Wirkung hat, so dass die Speiseeisbildung praktisch überhaupt nicht behindert ist.

Weiters hat sich in diesem Zusammenhang als vorteilhaft erwiesen, wenn die Bodenwand des Bodenteiles im wesentlichen parallel zur Wölbung der zum Zusammenwirken mit dem Schab- und Rührwerkzeug dienenden Scheibenhauptwand gewölbt verlaufend ausgebildet ist und in derjenigen der beiden gewölbten Wände, die nach aussen gewölbt ist, eine verschliessbare Einfüllöffnung für das Latentwärmespeichermittel vorgesehen ist. Auf diese Weise befindet sich die Einfüllöffnung immer an der höchsten Stelle der Kältepatrone, wodurch gewährleistet ist, dass sie möglichst vollständig mit Latentwärmespeichermittel gefüllt werden kann und praktisch keine Luftblasen mehr enthält.

Hinsichtlich der Ausbildung des Bodenteiles dahingehend, dass sich mindestens eine seiner Wandungen selbst der Volumenänderung des Latentwärmespeichermittels beim Phasenübergang reversibel anpassen kann, bestehen verschiedene Möglichkeiten, wobei als ein wesentlicher Parameter die Wahl der Wandstärke zu erwähnen ist. Aber auch Material und Formgebung spielen hier eine wichtige Rolle. So hat sich als sehr vorteilhaft erwiesen, wenn der wannenförmige Bodenteil aus elastisch nachgiebigem Kunststoff besteht. Zu erwähnen ist dabei, dass es bei Kältespeichern allgemeiner Art an sich bekannt ist, diese als Ganzes aus Kunststoff herzustellen, wie dies beispielsweise in der bereits erwähnten DE-OS 28 46 988 angegeben ist. Demgegenüber wird im vorliegenden Zusammenhang aber nur der Bodenteil einer Kältepatrone, der an sich flexibel sein soll, aus einem, elastisch nachgiebigen Kunststoff hergestellt, wogegen die mit dem Schab- und Rührwerkzeug einer Speiseeismaschine zusammenwirkende Scheibenhauptwand der Kältepatrone formstabil ausgebildet ist.

Als vorteilhaft hat sich auch erwiesen, wenn in ihrem Inneren im Bereich der Bodenwand des Bodenteiles eine ein federnd eingeschlossenes Gas enthaltende Gasfeder angeordnet ist und dass im Inneren der Kältepatrone zwischen der Gasfeder und der Scheibenhauptwand Wärmeleitbleche angeordnet sind, die in wärmeleitenden Kontakt mit der Scheibenhauptwand stehen. Mit einer solchen, beispielsweise Luft enthaltenden Gasfeder kann ein Teil der Volumenänderungen des Latentwärmespeichermittels aufgenommen werden, wodurch an die Flexibilität des Bodenteiles nur noch geringere Anforderungen zu stellen sind, was konstruktive Vorteile mit sich bringt.

Für die Ausbildung einer derartigen Gasfeder bestehen verschiedene Möglichkeiten. So hat sich als einfach und vorteilhaft erwiesen, wenn die Gasfeder aus einem flachen Behälter mit flexiblen Wänden besteht.

Ebenfalls als einfach und vorteilhaft hat sich erwiesen, wenn die Gasfeder aus einem spiralförmig aufgewickelten an seine beiden Enden abgeschlossenen Gummischlauch besteht.

Als besonders einfach und vorteilhaft hat sich erwiesen, wenn die Gasfeder aus einer Zellgummischeibe besteht. Ein solche Zellgummischeibe, die beispielsweise aus Naturkautschuk oder Silikongummi mit überwiegend geschlossenen Poren besteht, ist nicht nur einfach und preiswert, sondern bietet den weiteren Vorteil, dass sie wärmedämmend wirkt, wodurch bodenseiteige Wärmeverluste der Kältepatrone vermieden werden und der Wärmeaustausch zur mit dem Schab- und Rührwerkzeug zusammenwirkenden Scheibenhauptwand begünstigt und damit die Speiseeisbildung an dieser Scheibenhauptwand gefördert wird.

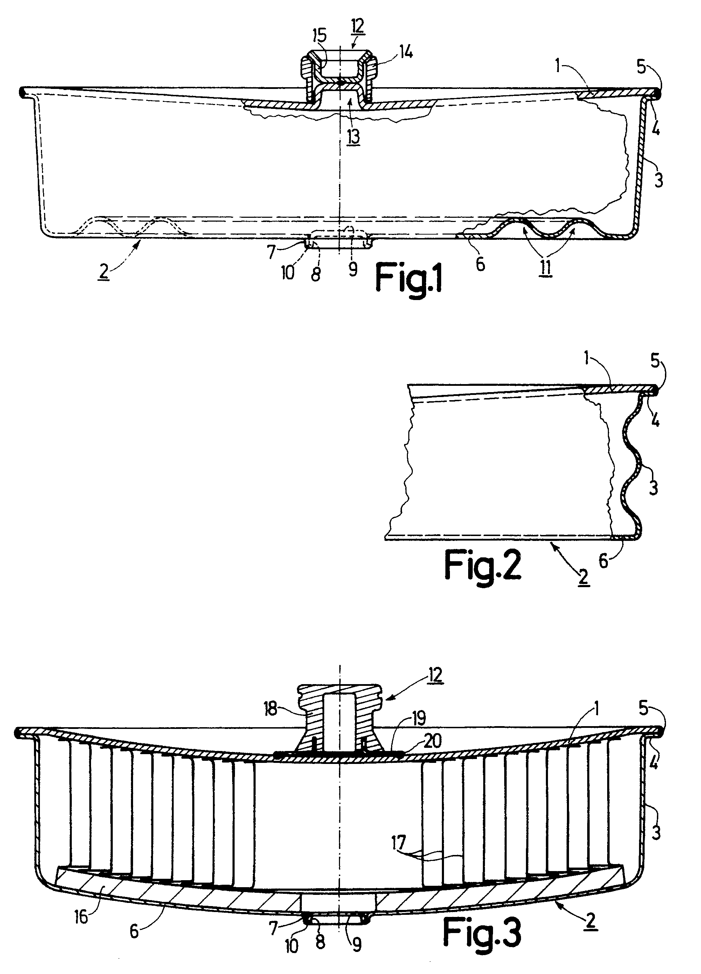

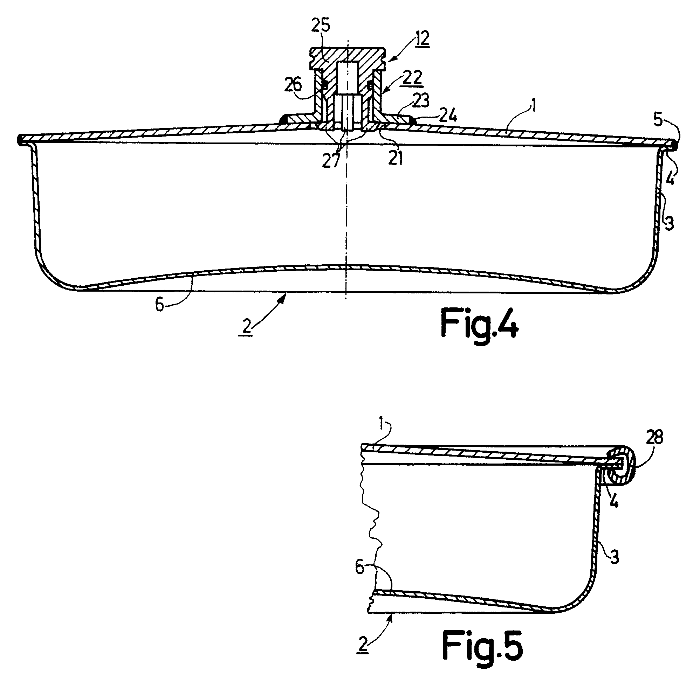

Die Erfindung wird im folgenden anhand der Zeichnungen, in welchen einige Ausführungsbeispiele der Erfindung dargestellt sind, auf die sie jedoch nicht beschränkt sein soll, näher erläutert. Fig. 1 zeigt eine Kältepatrone, bei der die mit dem Schab- und Rührwerkzeug zusammenwirkende Scheibenhauptwand kegelförmig nach innen gewölbt und in ihrem Zentrum mit einem als Handgriff ausgebildeten Gegenlager für das Schab- und Rührwerkzeug versehen ist und die Bodenwand des Bodenteiles Sicken aufweist. Fig. 2 zeigt in Abwandlung des Ausführungsbeispiels nach Fig. 1 abschnittsweise eine Kältepatrone, bei der die umfangsseitige Wandung des Bodenteiles als Federbalg ausgebildet ist. Fig. 3 zeigt eine Kältepatrone, bei der die mit dem Schab- und Rührwerkzeug zusammenwirkende Scheibenhauptwand kalottenförmig nach innen gewölbt und in ihrem Zentrum mit einem als Handgriff ausgebildeten Gegenlager für das Schab- und Rührwerkzeug versehen ist. Fig. 4 zeigt eine Kältepatrone, bei der die mit dem Schab- und Rührwerkzeug zusammenwirkende Scheibenhauptwand kegelförmig nach aussen gewölbt und in ihrem Zentrum mit einem als Handgriff ausgebildeten Gegenlager für das Schab- und Rührwerkzeug versehen ist, das als verschliessbare Einfüllöffnung für das Latentwärmespeichermittel ausgebildet ist. Fig. 5 zeigt in Abwandlung des Ausführungsbeispieles nach Fig. 4 abschnittsweise eine Kältepatrone, bei der ein aus elastisch nachgiebigem Kunststoff bestehender Bodenteil mittels eines einen U-förmigen Querschnitt aufweisenden Klemmringes mit der mit dem Schab- und Rührwerkzeug zusammenwirkenden Scheibenhauptwand verbunden ist.

Die in Fig. 1 dargestellte Kältepatrone besteht aus zwei miteinander verbundenen Teilen, von welchen ein Teil die dem Schab- und Rührwerkzeug der Speiseeismaschine zugewandte Scheibenhauptwand 1 und der andere Teil ein wanneförmiger Bodenteil 2 ist. Die Scheibenhauptwand 1 ist so ausgebildet, dass sie formstabil ist, was deshalb wichtig ist, damit das Schab- und Rührwerkzeug mit ihr einwandfrei zusammenwirken kann, so dass das sich an ihr bildendes Speiseeis einwandfrei und gleichmässig abgeschabt wird. Die Formstabilität wird dabei durch eine entsprechend gewählte Wandstärke und eine Wölbung erreicht. Im vorliegenden Fall ist die Scheibenhauptwand 1 kegelförmig nach innen gewölbt. Demgegenüber ist der wannenförmige Bodenteil 2 so ausgebildet, dass mindestens eine seiner Wandungen flexibel ist, damit sich der Bodenteil Volumenänderungen eines in die Kältepatrone eingefüllten Latentwärmespeichermittels beim Phasenübergang desselben zwischen flüssig und fest beziehungsweise umgekehrt reversibel anpassen kann und somit nicht die Scheibenhauptwand 1 verformt wird. Solche Volumenänderungen können mehrere Volumenprozent betragen, so dass der Bodenteil dementsprechend flexibel auszubilden ist, was durch eine relativ dünne Wandstärke beziehungsweise entsprechende Formgebung erreicht wird. Als Materialien für die beiden Teile eignen sich dabei sehr gut Bleche aus Edelstahl, beispielsweise Chromnickelstahl, die korresionsfest sind und sich gut tiefziehen und schweissen lassen. Hierbei kann beispielsweise die Wandstärke der Scheibenhauptwand 1 mit 1,2 mm und die Wandstärke des Bodenteiles 2 mit 0,8 mm gewählt werden.

Der wannenförmige Bodenteil weist am oberen Ende seiner umfangsseitigen Wandung 3 einen nach aussen abgewinkelten Rand 4 auf, an dem die Scheibenhauptwand 1 im Bereich ihres Umfanges zur Anlage gebracht wird, wobei dann die beiden Teile umfangsseitig durch eine Schweissnaht 5 miteinander verbunden werden. In der Bodenwand 6 des Bodenteiles 2 ist eine Öffnung mit einem nach aussen umgebördelten Rand 7 vorgesehen, die zum Einfüllen des Latentwärmespeichermittels in die Kältepatrone dient. Nach dem Einfüllen dieses Latentwärmespeichermittels wird diese Öffnung mit einer ebenfalls einen umgebördelten Rand 8 aufweisenden Platte 9 abgeschlossen, wonach dann die freien Enden der beiden umgebördelten Ränder 7 und 8 durch eine Schweissnaht 10 miteinander verbunden werden. Wesentlich ist, dass die Kältepatrone möglichst vollständig mit Latentwärmespeichermittel gefüllt ist, damit sie keine Luftblasen enthält, die sich in der in Fig. 1 gezeigten Betriebslage der Kältepatrone an ihrer höchsten Stelle ansammeln würden, was im Bereich der Scheibenhauptwand 1 wäre. Solche Luftblasen würden den Wärmeübergang zwischen dem Latentwärmespeichermittel und der Scheibenhauptwand 1 wesentlichen beeinträchtigen, was zu einer ungleichmässigen Speiseeisbildung an der Scheibenhauptwand 1 führen würde. In diesem Zusammenhang ergibt die zur Erhöhung der Stabilität der Scheibenhauptwand 1 vorgesehene Wölbung derselben einen weiteren Vorteil, da sich allenfalls in der Kältepatrone enthaltene Luftblasen an der höchsten Stelle der Wölbung ansammeln, was beim vorliegenden Ausführungsbeispiel im Bereich des Umfanges der Scheibenhauptwand 1 wäre. Dies bedeutet aber, dass sich solche Luftblasen in einem für die Speiseeisbildung nicht sehr störenden Bereich ansammeln würden, so dass durch sie der überwiegende Teil der Speiseeisbildung nicht beeinträchtigt wäre, was im übrigen auch für das im folgenden beschriebene Ausführungsbeispiel nach Fig. 3 gilt.

Um die Flexibilität des Bodenteiles 2 weiter zu begünstigen, ist beim vorliegenden Ausführungsbeispiel seine Bodenwand 6 mit Sicken 11 versehen, wodurch erreicht wird, dass die Bodenwand 6 besonders gut reversibel nachgiebig ist. Zu erwähnen ist, dass der Bodenteil 2 selbstverständlich nicht zwingenderweise als ein einziger Teil ausgebildet sein muss, sondern dass er auch aus mehreren Teilen zusammengesetzt sein könnte, beispielsweise aus einer eigenen umfangsseitigen Wandung 3 und einer separaten Bodenwand 6, die dann mit einer Schweissverbindung zu einem wannenförmigen Bodenteil 2 verbunden werden könnten.

Als zweckmässig hat sich erwiesen, wenn das Verhältnis der Oberfläche der zum Zusammenwirken mit dem Schab- und Rührwerkzeug dienenden Scheibenhauptwand 1 in cm$^2$ zum Volumen des Latentwärmespeichermittels in cm$^3$ im Bereich zwischen 0,3 und 0,6, vorzugsweise zwischen 0,34 und 0,39, liegt. Auf diese Weise wird ein guter Wärmeübergang zwischen dem Latentwärmespeichermittel und der Scheibenhauptwand 1 erreicht, der einerseits nicht zu schnell und andererseits nicht zu langsam vor sich geht, so dass die Speiseeisbildung einwandfrei und gleichmässig erfolgt. Würde der Wärmeübergang zu schnell vor sich gehen, so könnte es zu einer Klumpenbildung von Speiseeis kommen beziehungsweise könnte das sich bildende Speiseeis zu fest an der Scheibenhauptwand 1 anfrieren, so dass es vom Schab- und Rührwerkzeug nicht mehr einwandfrei abgeschabt werden könnte, wogegen im Falle eines zu langsamen Wärmeüberganges es zu grösseren Wärmeverlusten kommen könnte, was zur Folge haben könnte, dass nicht genügend Speiseeis gebildet wird. Als Latentwärmespeichermittel an sich hat sich als sehr zweckmässig erwiesen, wenn ein solches auf Basis eines eutektischen Gemisches aus Wasser und einem Salzhydrat verwendet wird, das zusätzlich 0,1 bis 6 Vol.% eines zweiten Wasser-Salzhydrat-Eutektikums enthält, dessen Schmelzpunkt niedriger als der des reinen Latentwärmespeichermittels ist. Solche Latentwärmespeichermittel haben insbesondere die Eigenschaft einer gleichmässigen Ausdehnung beim Phasenübergang, was im Hinblick auf die erforderliche Flexibilität des Bodenteiles 2 vorteilhaft ist, da bei einer gleichmässigen Ausdehnung die Gefahr einer Beschädigung des Bodenteiles wesentlich herabgesetzt wird.

Wie aus Fig. 1 ersichtlich ist, ist im Zentrum der Scheibenhauptwand 1 ein durch einen gegenüber derselben erhabenen Teil gebildetes Gegenlager 12 für das Schab- und Ruhrwerkzeug vorgesehen. Hierzu ist im Zentrum der Scheibenhauptwand 1 eine nach aussen gerichtete Ausbuchtung 13 vorgesehen, auf die aussen eine beispielsweise aus Kunststoff bestehende Hülse 14 aufgesetzt ist, in die ein Topf 15 eingesetzt ist, der mit seinem Boden an der Ausbuchtung 13 aussen aufliegt und dort mit ihr verschweisst ist. Das Innere des Topfes 15 bildet dabei das Gegenlager für ein freies Ende des Schab- und Rührwerkzeuges, so dass dieses besonders sicher mit der Scheibenhauptwand 1 zusammenwirken kann. Der gesamte erhabene Teil, zusammen mit der Hülse 14, sind dabei als Handgriff verwendbar, wodurch die Kältepatrone einfach zu hantieren ist, insbesondere beim Einsetzen in die Speiseeismaschine beziehungsweise beim Herausnehmen aus derselben. Eine solche nach aussen gerichtete Ausbuchtung 13 an der Scheibenhauptwand 1 bildet einen höher gelegenen Raum, analog wie der durch die nach innen gerichtete Wölbung der Scheibenhauptwand 1 im Bereich der Umrandung der Kältepatrone befindliche Raum, in dem sich gegebenenfalls in der Kältepatrone enthaltene Luftblasen ansammeln können. Solche sich gegebenenfalls in der Ausbuchtung 13 ansammelnde Luftblasen sind für die Speiseeisbildung an der Scheibenhauptwand 1 nicht störend, da sie im Zentralbereich des Schab- und Rührwerkzeuges liegen, wo keine Speiseeisbildung erfolgt.

Beim Ausführungsbeispiel nach Fig. 2 ist eine Kältepatrone mit einem Bodenteil 2 gezeigt, dessen besondere Flexibilität dadurch erreicht ist, dass seine umfangsseitige Wandung 3 als gewellter Federbalg ausgebildet ist. Auf diese Weise ist der gesamte Bodenteil 2 höhenmässig flexibel, so dass er sich gut der Volumenänderung des Latentwärmespeichermittels beim Phasenübergang anpassen kann. Falls erwünscht, könnte natürlich auch im vorliegenden Fall zusätzlich die Bodenwand 6 des Bodenteiles 2 mit Sicken versehen werden, wie dies beim Ausführungsbeispiel nach Fig. 1 vorgesehen ist, wodurch die Flexibilität des Bodenteiles 2 noch weiter erhöht werden könnte.

Beim Ausführungsbeispiel nach Fig. 3 ist die Scheibenhauptwand 1 kalottenförmig nach innen gewölbt, wodurch eine besonders hohe Formstabilität erhalten wird. Bei diesem Ausführungsbeispiel ist im Inneren der Kältepatrone im Bereich der Bodenwand 6 des Bodenteiles 2 eine Gasfeder angeordnet, die hier als Zellgummischeibe 16 ausgebildet ist. Eine solche Zellgummischeibe, die beispielsweise aus Naturkautschuk oder Silikongummi mit überwiegend geschlossenen Poren besteht, hat die Eigenschaft, dass sie elastisch nachgiebig und damit in der Lage ist, einen Teil der Volumenänderung des Latentwärmespeichermittels beim Phasenübergang aufnehmen zu können, wodurch sich die Anforderungen an die Flexibilität des Bodenteiles 2 verringern. Ausserdem wirkt eine solche Zellgummischeibe wärmedämmend, wodurch bodenseitige Wärmeverluste verringert werden, was sich auf die Speiseeisbildung vorteilhaft auswirkt.

Für die Ausbildung einer solchen ein federnd eingeschlossenes Gas enthaltenden Gasfeder bestehen natürlich auch noch andere Ausführungsmöglichkeiten. Auf einfache Weise kann eine solche Gasfeder beispielsweise auch aus einem flachen Behälter mit flexiblen Wänden bestehen. Als einfach hat sich auch erwiesen, wenn die Gasfeder aus einem spiralförmig aufgewickelten, an seinen beiden Enden abgeschlossenen Gummischlauch besteht. Solche Gasfedern können Luft oder ein spezielles Gas enthalten.

Weiters sind bei diesem Ausführungsbeispiel im Inneren der Kältepatrone Wärmeleitbleche 17 angeordnet, die in wärmeleitenden Kontakt mit der Scheibenhauptwand 1 stehen. Hierdruch wird in bekannter Weise der Wärmeübergang vom Latentwärmespeichermittel zur Scheibenhauptwand 1 besonders begünstigt. Beispielsweise können diese Wärmeleitbleche aus einem spiralförmig aufgewickelten Kupferband bestehen, dessen beide Ränder abgewinkelt sind, wobei sich eine Abwinkelung an der Scheibenhauptwand 1 und die andere Abwinkelung an der Zellgummischeibe 16 abstützt. Selbstverständlich sind auch noch andere Formgebungen und Materialien für solche Wätmeleitbleche möglich, wobei aber stets wichtig ist, dass sie in guten wärmeleitenden Kontakt mit der Scheibenhauptwand 1 stehen. Beispielsweise können solche Wärmeleitbleche auch an die Scheibenhauptwand 1 angeschweisst sein.

Auch bei diesem Ausführungsbeispiel ist im Zentrum der Scheibenhauptwand 1 ein als Handgriff ausgebildetes Gegenlager 12 für das Schab- und Rührwerkzeug vorgesehen, das hier aus einem im wesentlichen zylindrischen Teil 18 besteht, der an seiner der Scheibenhauptwand 1 zugewandten Wand mit einer Metallscheibe 19 verbunden ist, die umfangsseitig durch eine Schweissnaht 20 mit der Scheibenhauptwand 1 verbunden ist. Zu einem solchen Gegenlager 12 ist an der Scheibenhauptwand 1 zugewandten Ende des zentralen Teiles des Schab- und Rührwerkzeuges der Speiseeismaschine eine zum zylindrischen Teil 18 des Gegenlagers 12 korrespondierende Vertiefung vorzusehen. Durch eine solche Lagerung des Schab- und Rührwerkzeuges im Bereich der Kältepatrone ist wieder sichergestellt, dass das sich an der Scheibenhauptwand 1 bildende Speiseeis einwandfrei und gleichmässig vom Schab- und Rührwerkzeug abgeschabt ist wird.

Beim Ausführungsbeispiel nach Fig. 4 ist die Scheibenhauptwand 1 kegelförmig nach aussen gewölbt. Dies bietet den Vorteil, dass sich gegebenenfalls in der Kältepatrone enthaltene Luftblasen nur im Zentrum der Scheibenhauptwand 1 ansammeln können, wo sie für die Speiseeisbildung nicht störend sind, da sie im Zentralbereich des Schab- und Rührwerkzeuges liegen, wo keine Speiseeisbildung erfolgt. Die Bodenwand 6 des Bodenteiles 2 ist bei diesem Ausführungsbeispiel nach innen gewölbt, wodurch eine sehr gute Flexibilität des Bodenteiles 2 erreicht wird, da eine derart geformte Bodenwand der Volumenänderung des Latentwärmespeichermittels beim Phasenübergang besonders gut folgen kann.

Im Zentrum der Scheibenhauptwand 1 ist auch bei diesem Ausführungsbeispiel ein als Handgriff ausgebildetes Gegenlager 12 vorgesehen, das in seiner Wirkungsweise demjenigen nach dem Ausführungsbeispiel von Fig. 3 entspricht. Zusätzlich ist dieses Gegenlager 12 aber hier noch als verschliessbare Einfüllöffnung für das Latentwärmespeichermittel ausgebildet. Hierzu weist die Scheibenhauptwand 1 in ihrem Zentrum eine Öffnung 21 auf, zu der koaxial eine nach aussen gerichtete Hülse 22 verläuft, die einen abgewinkelten Rand 23 aufweist, der an der Aussenseite der Scheibenhauptwand 1 anliegt und im Bereich seiner Umrandung durch eine Schweissnaht 24 mit der Scheibenhauptwand 1 verbunden ist. Auf diese Weise bildet die Hülse 22 einen Einfüllstutzen für das Latentwärmespeichermittel. Die Öffnung dieses Einfüllstutzens ist mit einem Stöpsel 25 verschliessbar, der mit seiner ausserhalb der Hülse 22 verlaufenden Umfangsfläche das Gegenlager 12 für das Schab- und und Rührwerkzeug bildet. Zur einwandfreien Abdichtung ist in den Schaft des Stöpsels 25 noch ein Dichtungsring 26 eingesetzt. Zum Festhalten des Stöpsels 25 an der Hülse 22 dienen mehrere an ihm winkelversetzt angeordnete Haken 27, die den abgewinkelten Rand 23 der Hülse 22 von innen her federnd hintergreifen. Die auf diese Weise gebildete Einfüllöffnung liegt an der höchsten Stelle der Kältepatrone, wodurch sichergestellt ist, dass sie möglichst vollständig mit Latentwärmespeichermittel gefüllt werden kann.

Beim vorliegenden Ausführungsbeispiel ist vorgesehen, dass der Bodenteil 2 aus einem Edelstahlblech besteht, wobei die umfangsseitige Wandung 3 einen nach aussen abgewinkelten Rand 4 aufweist, der umfangsseitig durch eine Schweissnaht 5 mit der Scheibenhauptwand 1 verbunden ist. Als sehr einfach und vorteilhaft hat sich aber auch erwiesen, wenn ein derartiger Bodenteil 2 aus einem elastisch nachgiebigen Kunststoff besteht, da auf diese Weise eine sehr gute Flexibilität des Bodenteiles, bei einfacher Herstellbarkeit desselben, erreichbar ist. Besonders vorteilhaft kann dabei ein durchsichtiger elastisch nachgiebiger Kunststoff verwendet werden, da dann optisch zu erkennen ist, in welchem Aggregatzustand sich das Latentwärmespeichermittel befindet. Beispielsweise kann dann einfach festgestellt werden, ob das in der Kältepatrone enthaltene Latentwärmespeichermittel vollständig gefroren ist und die Kältepatrone damit zur Speiseeisherstellung betriebsbereit ist. Fig. 5 zeigt die Verbindung eines solchen aus Kunststoff bestehenden Bodenteiles 2 mit der Scheibenhauptwand 1, die beispielsweise durch einen einen U-förmigen Querschnitt aufweisenden Klemmring 28 erfolgen kann, der den an der umfangsseitigen Wandung 3 des Bodenteiles 2 vorgesehen abgewinkelten Rand 4 und die Scheibenhauptwand 1 in ihrem Umfangsbereich umfasst und gegeneinander gedrückt hält.

**Patentansprüche**

1. Scheibenförmige, in eine Speiseeismaschine einlegbare Kältepatrone, die mit einem Latentwärmespeichermittel gefüllt ist und deren eine Scheibenhauptwand (1) zum Zusammenwirken mit einem Schab- und Rührwerkzeug der, Speiseeismaschine dient, dadurch gekennzeichnet, dass die Kältepatrone durch mindestens zwei miteinander verbundene Teile (1, 2) gebildet ist, von welchen ein Teil aus der dem Schab- und Rührwerkzeug zugewandten Scheibenhauptwand (1) und der andere Teil aus einem wannenförmigen Bodenteil (2) besteht, dass die zum Zusammenwirken mit dem Schab- und Rührwerkzeug dienende Scheibenhauptwand (1) formstabil und gewölbt ausgebildet ist, dass mindestens eine Wandung (3, 6) des Bodenteiles (2) sich selbst der Volumenänderung des Latentwärmespeichermittels beim Phasenübergang reversibel anpassbar ausgebildet ist, und dass im Zentrum der zum Zusammenwirken mit dem Schab- und Rührwerkzeug dienenden Scheibenhauptwand (1) ein Gegenlager (12) für das Schab- und Rührwerkzeug der Speiseeismaschine vorgesehen ist und dass dieses Gegenlager durch einen gegenüber der Scheibenhauptwand erhabenen, als Handgriff verwendbaren Teil gebildet ist.

2. Kältepatrone nach Anspruch 1, dadurch gekennzeichnet, dass die Wölbung der zum Zusammenwirken mit dem Schab- und Rührwerkzeug dienenden Scheibenhauptwand (1) kalottenförmig ausgebildet ist.

3. Kältepatrone nach einem der vorhergehenden Ansprüche, dadurch gekennzeichnet, dass die zum Zusammenwirken mit dem Schab- und Rührwerkzeug dienende Scheibenhauptwand (1) nach aussen gewölbt ist.

4. Kältepatrone nach einem der vorhergehenden Ansprüche, dadurch gekennzeichnet, dass die Bodenwand (6) des Bodenteiles (2) im wesentlichen parallel zur Wölbung der zum Zusammenwirken mit dem Schab- und Rührwerkzeug dienenden Scheibenhauptwand (1) gewölbt verlaufend ausgebildet ist und dass in derjenigen der beiden gewölbten Wände, die nach aussen gewölbt ist, eine verschliessbare Einfüllöffnung (7, 21) für das Latentwärmespeichermittel vorgesehen ist.

5. Kältepatrone nach Anspruch 4, dadurch gekennzeichnet, dass das Gegenlager (12) als verschliessbare Einfüllöffnung (21) für das Latentwärmespeichermittel ausgebildet ist.

6. Kältepatrone nach einem der vorhergehenden Ansprüche, dadurch gekennzeichnet, dass der wannenförmige Bodenteil aus elastisch nachgiebigem Kunststoff besteht.

7. Kältepatrone nach einem der vorhergehenden Ansprüche, dadurch gekennzeichnet, dass in ihrem Inneren im Bereich der Bodenwand (6) des Bodenteiles (2) eine ein federnd eingeschlossenes Gas enthaltende Gasfeder angeordnet ist und dass im Inneren der Kältepatrone zwischen der Gasfeder und der Scheibenhauptwand (1) Wärmeleitbleche (17) angeordnet sind, die in wärmeleitenden Kontakt mit der Scheibenhauptwand stehen.

8. Kältepatrone nach Anspruch 7, dadurch gekennzeichnet, dass die Gasfeder aus einem flachen Behälter mit flexiblen Wänden besteht.

9. Kältepatrone nach Anspruch 7, dadurch gekennzeichnet, dass die Gasfeder aus einem spiralförmig aufgewickelten, an seinen beiden Enden abgeschlossenen Gummischlauch besteht.

10. Kältepatrone nach Anspruch 7, dadurch gekennzeichnet, dass die Gasfeder aus einer Zellgummischeibe (16) besteht.

**Claims**

1. A discoid cold cartridge insertable into an ice-cream machine, which cartridge is filled with a latent heat storage medium and has a discoid main wall (1) adapted to cooperate with a scraping and stirring tool of the ice-cream machine, characterised in that the cold cartridge comprises at least two interconnected parts (1, 2), of which one part is constituted by the discoid main wall (1) which faces the scraping and stirring tool and the other part is constituted by a trough-shaped base (2), the discoid main wall (1) which is adapted to cooperate with the scraping and stirring tool is constructed to have a stable and curved shape, at least one wall (3, 6) of the base (2) can reversibly adapt itself to the change in volume of the latent heat storage medium during the phase transition, and in the centre of the discoid main wall (1) which is adapted to cooperate with the scraping and stirring tool there is provided an abutment (12) for the scraping and stirring tool of the ice-cream machine and said abutment is constituted by a part which projects from the discoid main wall and can be used as a grip.

2. A cold cartridge as claimed in Claim 1, characterised in that the discoid main wall (1) which is adapted to cooperate with the scraping and stirring tool has a dome-shaped curvature.

3. A cold cartridge as claimed in any one of the preceding Claims, characterised in that the discoid main wall (1) which is adapted to cooperate with the scraping and stirring tool has an outward curvature.

4. A cold cartridge as claimed in any one of the preceding Claims, characterised in that the bottom wall (6) of the base (2) is curved substantially parallel to the curvature of the discoid main wall (1) which is adapted to cooperate with the scraping and stirring tool, and a sealable filling opening (7, 21) for the latent heat storage medium is formed in that one of the two curved walls which has an outward curvature.

5. A cold cartridge as claimed in Claim 4, characterised in that the abutment (12) is constructed as a sealable filling opening (7, 21) for the latent heat storage medium.

6. A cold cartridge as claimed in any one of the preceding claims, characterised in that the trough-shaped base is made of an elastically flexible plastics.

7. A cold cartridge as claimed in any one of the preceding claims, characterised in that a gas spring containing a gas so as to produce resilience is arranged in its interior in the area of the bottom wall (6) of the base (2), and in the interior of the cold cartridge heat-conducting plates (17) are arranged between the gas spring and the discoid main wall (1) in thermally conductive contact with the discoid main wall.

8. A cold cartridge as claimed in Claim 7, characterised in that the gas spring comprises a flat container with flexible walls.

9. A cold cartridge as claimed in Claim 7, characterised in that the gas spring comprises a spirally wound rubber tube sealed at both ends.

10. A cold cartridge as claimed in claim 7, characterised in that the gas spring comprises a cellular rubber disc (16).

## Revendications

1. Cartouche frigorifique en forme de disque, pouvant être mise en place dans une sorbetière, qui est remplie d'un agent accumulateur de chaleur latente et dont une paroi principale discoïde (1) est destinée à coopérer avec un outil de raclage et de malaxage de la sorbetière, caractérisée en ce que la cartouche frigorifique est formée par au moins deux parties (1, 2) reliées l'une à l'autre, l'une de ces parties étant constituée par la paroi principale discoïde (1) tournée vers l'outil de raclage et de malaxage et l'autre par une une partie inférieure (2) en forme de cuvette, que la paroi principale discoïde (1) destinée à coopérer avec l'outil de raclage et de malaxage est d'une configuration bombée et indéformable, qu'au moins une paroi (3, 6) de la partie inférieure (2) est d'une configuration adaptable de manière réversible aux variations de volume de l'agent accumulateur de chaleur latente lors d'une transition de phases, et qu'au centre de la paroi principale discoïde (1) destinée à coopérer avec l'outil de raclage et de malaxage, est prévue une crapaudine (12) destinée à l'outil de raclage et de malaxage de la sorbetière et que cette crapaudine est formée par une partie en saillie par rapport à la paroi principale discoïde et utilisable comme poignée.

2. Cartouche frigorifique suivant la revendication 1, caractérisée en ce que le bombé de la paroi principale discoïde (1) destinée à coopérer avec l'outil de raclage et de malaxage a la forme d'une calotte.

3. Cartouche frigorifique suivant l'une ou l'autre des revendications précédentes, caractérisée en ce que la paroi principale discoïde (1) destinée à coopérer avec l'outil de raclage et de malaxage est bombée vers l'extérieur.

4. Cartouche frigorifique suivant l'une quelconque des revendications précédentes, caractérisée en ce que la paroi de fond (6) de la partie inférieure (2) est bombée en substance parallèlement au bombé de la paroi principale discoïde (1) destinée à coopérer avec l'outil de raclage et de malaxage et que, dans celle des deux parois bombées qui est courbée vers l'extérieur, est prévu un orifice de remplissage obturable (7, 21) pour l'agent accumulateur de chaleur latente.

5. Cartouche frigorifique suivant la revendication 4, caractérisée en ce que la crapaudine (12) a la forme d'un orifice de remplissage obturable (21) pour l'agent accumulateur de chaleur latente.

6. Cartouche frigorifique suivant l'une quelconque des revendications précédentes, caractérisée en ce que la partie inférieure en forme de cuvette est faite d'une matière plastique élastiquement flexible.

7. Cartouche frigorifique suivant l'une quelconque des revendications précédentes, caractérisée en ce qu'à l'intérieur de la cartouche, dans la zone de la paroi de fond (6) de la partie inférieure (2), est disposé un ressort à gaz contenant un gaz occlus et qu'à l'intérieur de la cartouche frigorifique, entre le ressort à gaz et la paroi principale discoïde (1), sont disposées des tôles conductrices de chaleur (17) qui sont en contact de conduction de chaleur avec la paroi principale discoïde.

8. Cartouche frigorifique suivant la revendication 7, caractérisée en ce que le ressort à gaz est fait d'un récipient plat à parois flexibles.

9. Cartouche frigorifique suivant la revendication 7, caractérisée en ce que le ressort à gaz est fait d'un boyau de caoutchouc enroulé en spirale et fermé aux deux bouts.

10. Cartouche frigorifique suivant la revendication 7, caractérisée en ce que le ressort à gaz est fait d'un disque de caoutchouc cellulaire (16).

Fig.1

Fig.2

Fig.3

Fig.4

Fig.5